# EUROPEAN PATENT APPLICATION

(11) **EP 4 083 145 A1**
(43) Date of publication of application: **02.11.2022**
(21) Application number: 21206613.8
(22) Date of filing: 05.11.2021
(51) Int. Cl.: C09C 1/24, C09C 1/36, C09K 23/00, C09K 23/14

(54) **STABLE TI-OXIDE AND FE-OXIDE PIGMENT SLURRIES COMPRISING PH-STABILIZING LITHIUM IONS**

(71) Applicant: Kronos International, Inc., 51373 Leverkusen (DE)
(72) Inventor: The designation of the inventor has not yet been filed

(57) **Abstract**

The present invention relates to water-based pigment slurry obtainable by dissolving and/or dispersing the following components in water:
(A) a Ti-oxide and/or Fe-oxide pigment,
(B) a pH-stabilizing composition comprising a water soluble or water dispersible source of lithium ions,
(C) a dispersant composition comprising a dispersant selected from the group of phosphoric acid derivatives and/or phosphonic acid derivatives,
to the use of a such a slurry for the preparation of a coating formulation, to a coating formulation comprising such a slurry and to a substrate which has a surface coated with such a coating formulation.

## Description

The present invention relates to a slurry comprising Ti-oxide and/or Fe-oxide pigments, to a coating composition, such as a paint or a printing ink, prepared by use of said slurry and to surfaces coated with such a composition.

Slurries containing pigments such as Ti-oxide and/or Fe-oxide pigments are used as precursors for the preparation of coating compositions such as paints or printing inks. Pigmented slurries must exhibit a good processability for example in terms of their viscosity, which must be stable even if the slurry is stored over a long period of time, for example several months. In order to achieve this, amongst other reasons, suitable dispersants are used which are mostly polyacrylic acid or polyacrylic acid esters.

Recently, compositions have been disclosed which use lithium and zinc ions as pH-stabilizing agents in order to maintain a constant pH value in order to prevent sedimentation. Preferably, the pH value is adjusted to a range in which the health risks for skin and eyes is minimized which is caused by high acidic or high alkaline ingredients. In addition, lithium and zinc ions are known to minimize biological growth in aqueous slurries. However, it has up to now not been possible to use these lithium and zinc ions containing compositions in pigmented slurries as the properties of the so prepared slurries were not stable. In particular, the processing properties of the slurries deteriorated already after a short time after preparation due to a steep increase in the viscosity of the slurry so that the slurries were no longer useable.

The object of the present invention is therefore to provide a slurry comprising pigments, such as Ti-oxide and/or Fe-oxide pigments with reduced sedimentation tendency and is thus storage-stable and simultaneously has good and stable processing properties e.g. in terms of its viscosity.

The present invention is based on the finding that such slurries can be provided if they contain a pH-stabilizing composition comprising a water soluble or water dispersible source of lithium ions in combination with a specific dispersant which is selected from the group of phosphoric acid derivatives and/or phosphonic acid derivatives.

The present invention therefore provides a water-based pigment slurry obtainable by dissolving and/or dispersing the following components in water:
(A) a Ti-oxide and/or Fe-oxide pigment,
(B) a pH-stabilizing composition comprising a water soluble or water dispersible source of lithium ions,
(C) a dispersant composition comprising a dispersant selected from the group of phosphoric acid derivatives and/or phosphonic acid derivatives.

The slurry of the invention fulfills all quality criteria for commercial use and it is stable so that it can be used even after storage for, at least, several months. In particular, it has a viscosity which lies within the desired range and which also remains stable over time.

Furthermore, lithium ions are used as primary source for providing a pH-stabilizing effect. In addition, it is known to control microbial growth.

Preferably the slurry of the invention contains less conventional biocides or is free of biocides, in particular organic biocides and heavy metal biocides (other than zinc ions).

More particularly, these biocides are, for example, phenols, halogenated phenols, halogen-containing compounds, halogen-releasing compounds, isothiazolinones, aldehyde-containing compounds, aldehyde- releasing compounds, guanidines, sulfones, thiocyanates, pyrithiones, antibiotics such as β-lactam antibiotics, quaternary ammonium salts, peroxides, perchlorates, amides, amines, heavy metals (other than zinc ions), biocidal enzymes, biocidal polypeptides, azoles, carbamates, glyphosates, sulphonamides and mixtures thereof.

The total solids content of the water based slurry of the invention can be up to 90.0 wt.%. For example, the solids content of the slurry can be from 10.0 to 85.0 wt.%, more preferably from 20.0 to 82.0 wt.%, still more preferably from 50 to 81 wt.% and most preferably from 70 to 80 wt.%, based on the total weight of the slurry.

For example, when containing TiO₂ as a pigment, the slurry may have a solids content of 73 to 77 wt.%.

The non-solid part of the water-based slurry contains, or consist of, water, and may furthermore contain other solvents as described in more detail herein below.

The pH of the water-based slurry can vary in a broad range and is preferably in a pH range typically observed for such water-based slurries. It is thus appreciated that the slurry preferably has a pH value of from 2 to 14, more preferably from 6 to 11.5, still more preferably from 7 to 10.5, and most preferably from 8.0 to 9.0.

Typically, the water-based slurry has a viscosity being preferably in the range from 50 to 5,000 mPas and more preferably from 80 to 2,000 mPas, and even more preferably from 100 to 1,000 mPas. The viscosity value of the slurry preferably remains stable in that range for at least 6 months.

Preferably, the water-based slurry is preferably microbiologically stable according to DIN EN ISO 11930.

Still further, the water-based slurry is preferably free of agglomerates as determined in the sieve residue test, i.e. it should have a residue in that test of <0.01 wt.%.

### Component (A)

Component (A) is a Ti-oxide and/or Fe-oxide pigment.

The term "pigment", as used herein, relates to inorganic colorants that are virtually insoluble in the application medium according to DIN 55943, which are neither chemically nor physically changed in the application medium and retain their particulate structure. They are employed for coloring, which is based on the interaction of the pigment particles with the visible light by absorption and remission.

Preferably, component (A) comprises, or consists of, a Ti-oxide pigment, and most preferably, component (A) comprises, or consists of, titanium dioxide.

Titanium dioxide is most preferred because of its pigment properties and its high Mohs hardness. Titanium dioxide may be present in the crystal structures of rutile, anatase or brookite, usually in the crystal structures of rutile or anatase. Rutile is particularly suitable as compared to anatase because of its lower photolytic catalytic activity.

Titanium dioxide (C.I. Pigment White 6) is a white pigment.

For example, Fe-oxide containing pigments are iron oxide black (C.I. Pigment Black 11); iron oxide red (C.I. Pigment Red 101); iron oxide brown (C.I. Pigment Brown 6 and 7), iron oxide yellow (C.I. Pigment Yellow 42).

The pigment(s) used as component (A) may have been surface-treated with compounds of aluminum, silicon, titanium, zirconium, tin, cerium or phosphorus, and/or with organic compounds selected from the group of silanes, siloxanes, trimethylolpropane (TMP), tri-methlylolethane (TME), and hexametha phosphates (HMP).

In the surface treatment, one or more layers or mixed layers of the coating substances may be applied. In a particular embodiment of the invention, the outer layer of the surface-treated particle contains Al compounds, especially aluminum oxide or water-containing aluminum oxide. The surface treatment is performed, for example, by precipitating the coating substances onto the particles in aqueous suspension. These methods are known, in particular, from titanium dioxide pigment technology, and can be applied according to the invention. The layer thickness of the surface coating applied to the particles within the scope of the surface treatment is within the nanometer range, preferably smaller than 10 nm, more preferably from 1 nm to 10 nm, so that the particle size of the surface-treated particles does not change significantly as compared to the untreated particles

The particle size of the pigments of component (A) is usually expressed as mass related median particle size d50 and measured as described herein below.

In general, the d50 particle size may be from 0.2 to 0.5 microns, and more preferably from 0.2 to 0.4 microns. Such particle size is usually denoted as "pigmentary" particle size.

The pigments of component (A) may, however, also comprise particle fractions with a different d50 particle size, such as a non-pigmentary, coarse e.g. titanium dioxide base pigment having a particle size d50 of from 2 to 200 microns, preferably from 2 to 100 microns, more preferably from 2 to 50 microns, and most preferably from 2 to 20 microns. If desired, the non-pigmentary, coarse fraction can be removed by established methods and techniques.

Such coarser particles may be used to create a matt surface of a surface coated with a coating formulation using the slurry of the invention, such as is described in WO 2017/133833.

Especially preferred TiO₂ pigments are such as available from Kronos International Inc., such as Kronos 2310.

Preferably, component (A) is dissolved and/or dispersed in the slurry of the invention in an amount of up to 90.0 wt.%, preferably from 10.0 to 85.0 wt.%, more preferably from 20.0 to 82.0 wt.%, still more preferably from 50 to 81 wt.% and most preferably from 70 to 80 wt.%, based on the total weight of the slurry.

Usually, the pigments of component (A) are mixed into the slurry using a composition containing the pigments. Such pigment compositions usually comprise the pigments in an amount of 80 wt.% or more, such as 90 to 95 wt.%.

Preferably, the pigment composition is mixed into the slurry in an amount of from of up to 90.0 wt.%, preferably from 10.0 to 87.0 wt.%, more preferably from 25.0 to 86.0 wt.%, still more preferably from 50 to 85 wt.% and most preferably from 70 to 83 wt.%, based on the total weight of the slurry.

### Component (B)

Component (B) is a pH-stabilizing composition containing a water soluble or water dispersible source of lithium ions.

It has a pH-stabilizing effect and thus prevents sedimentation. In addition, it is known to control microbial growth.

Preferably, the at least one water soluble or water dispersible source of lithium ions is present in the pH-stabilizing composition in an amount of at least 100 ppm, e.g. from 100 to 27,000 ppm, preferably of at least 250 ppm, e.g. from 250 to 25,000 ppm, more preferably at least 500 ppm, e.g. from 500 to 20,000 ppm, still more preferably at least 600 ppm, e.g. from 600 to 15,000 ppm, even more preferably at least 750 ppm, e.g. from 750 to 10,000 ppm, and most preferably from 750 to 5,000 ppm, calculated relative to the weight of water of the pH-stabilizing composition.

Preferably, component (B) also contains a water soluble or water dispersible source of zinc ions.

Optionally, component (B) further comprises at least one water soluble or water dispersible source of magnesium ions and/or at least one water soluble or water dispersible source of sodium ions.

Compositions containing both a water soluble or water dispersible source of lithium ions and a water soluble or water dispersible source of zinc ions and, optionally, at least one water soluble or water dispersible source of magnesium ions and/or at least one water soluble or water dispersible source of sodium ions are disclosed in WO 2018/210853 to which it is referred. It is also referred to the definitions of the ions' sources, water soluble and water dispersible as well as source given in WO 2018/210853

Preferably, the at least one water soluble or water dispersible source of lithium ions is present in the pH-stabilizing composition in an amount of at least 100 ppm, e.g. from 100 to 27,000 ppm, preferably of at least 250 ppm, e.g. from 250 to 25,000 ppm, more preferably at least 500 ppm, e.g. from 500 to 20,000 ppm, still more preferably at least 600 ppm, e.g. from 600 to 15,000 ppm, even more preferably at least 750 ppm, e.g. from 750 to 10,000 ppm, and most preferably from 750 to 5,000 ppm, calculated relative to the weight of water of the pH-stabilizing composition.

Preferably, the at least one water soluble or water dispersible source of zinc ions is present in the pH-stabilizing composition in an amount of at least 100 ppm, e.g. from 100 to 27,000 ppm, preferably of at least 250 ppm, e.g. from 250 to 25,000 ppm, more preferably at least 500 ppm, e.g. from 500 to 20,000 ppm, still more preferably at least 600 ppm, e.g. from 600 to 15,000 ppm, even more preferably at least 750 ppm, e.g. from 750 to 10,000 ppm, and most preferably from 750 to 5,000 ppm, calculated relative to the weight of water of the pH-stabilizing composition.

If present, preferably, the at least one water soluble or water dispersible source of magnesium ions is present in the pH-stabilizing composition in an amount of at least 100 ppm, e.g. from 100 to 27,000 ppm, preferably of at least 250 ppm, e.g. from 250 to 25,000 ppm, more preferably at least 500 ppm, e.g. from 500 to 20,000 ppm, still more preferably at least 600 ppm, e.g. from 600 to 15,000 ppm, even more preferably at least 750 ppm, e.g. from 750 to 10,000 ppm, and most preferably from 750 to 5,000 ppm, calculated relative to the weight of water of the pH-stabilizing composition.

If present, preferably, the at least one water soluble or water dispersible source of sodium ions is present in the pH-stabilizing composition in an amount of at least 100 ppm, e.g. from 100 to 27,000 ppm, preferably of at least 250 ppm, e.g. from 250 to 25,000 ppm, more preferably at least 500 ppm, e.g. from 500 to 20,000 ppm, still more preferably at least 600 ppm, e.g. from 600 to 15,000 ppm, even more preferably at least 750 ppm, e.g. from 750 to 10,000 ppm, and most preferably from 750 to 5,000 ppm, calculated relative to the weight of water of the pH-stabilizing composition.

The at least one water soluble or water dispersible source of lithium ions is preferably at least one lithium salt, preferably the at least one lithium salt is selected from lithium carbonate, lithium chloride, lithium hydroxide, lithium phosphate, lithium citrate, lithium maleate, lithium acetate and lithium lactate; polymeric salts of lithium and mixtures thereof, said polymeric salt of lithium is preferably selected from lithium salts of acrylic homopolymers, acrylic copolymers such as copolymers of acrylic acid and maleic acid and/or acrylamide, polyphosphates and mixtures thereof, said polymeric salt of lithium is more preferably Li₂Na₂polyphosphate, lithium-sodium hexamethaphosphate or lithium polyacrylate.

In one embodiment, the at least one water soluble or water dispersible source of lithium ions is preferably provided in the form of at least one lithium salt. Preferably, the anionic group of the at least one lithium salt is selected from the group comprising carbonate, chloride, hydroxide, phosphate, citrate, maleate, acetate, lactate and mixtures thereof. In particular, the at least one lithium salt is selected from lithium carbonate, lithium chloride, lithium hydroxide, lithium phosphate, lithium citrate, lithium maleate, lithium acetate and lithium lactate, polymeric salts of lithium and mixtures thereof.

For example, the at least one water soluble or water dispersible source of lithium ions is preferably lithium carbonate (CAS NO. 554-13-2), lithium citrate (CAS NO. 919-16-4) or lithium hydroxide (CAS NO. 1310-65-2). Preferably, the at least one water soluble or water dispersible source of lithium ions is lithium carbonate.

In one embodiment, the at least one water soluble or water dispersible source of zinc ions is preferably provided in the form of at least one zinc salt. Preferably, the anionic group of the at least one zinc salt is selected from the group comprising carbonate, oxide, chloride, hydroxide, phosphate, citrate, maleate, acetate, lactate, sulphate, nitrate and mixtures thereof. In particular, the at least one lithium salt is selected from zinc carbonate, zinc oxide, zinc chloride, zinc hydroxide, zinc phosphate, zinc citrate, zinc maleate, zinc acetate and zinc lactate; polymeric salts of zinc and mixtures thereof.

For example, the at least one water soluble or water dispersible source of zinc ions is preferably zinc carbonate, zinc oxide or zinc hydroxide. Preferably, the at least one water soluble or water dispersible source of zinc ions is zinc oxide. Additionally or alternatively, the at least one water soluble or water dispersible source of zinc ions is present as a polymeric salt of zinc, such as acrylic homopolymers, acrylic copolymers such as copolymers of acrylic acid and maleic acid and/or acrylamide, polyphosphates and mixtures thereof having multiple acidic sites which can be partially or totally neutralized with zinc ions. The polymeric salt of zinc is preferably zinc polyacrylate.

For example, also Zink-Pyrithion can be used as water dispersible source of zinc ions.

The weight ratio of the at least one water soluble or water dispersible source of zinc ions to the at least one water soluble or water dispersible source of lithium ions [Zn/Li] is preferably from 100:1 to 1:100, more preferably from 10:1 to 1:10 and most preferably from 3:1 to 1:3.

If magnesium is present, the weight ratio of the at least one water soluble or water dispersible source of magnesium ions to the at least one water soluble or water dispersible source of zinc ions [Mg/Zn] is preferably from 100:1 to 1:100, more preferably from 10:1 to 1:10 and most preferably from 3:1 to 1:3,
and/or the weight ratio of the at least one water soluble or water dispersible source of magnesium ions to the at least one water soluble or water dispersible source of lithium ions [Mg/Li] is from 100:1 to 1:100, more preferably from 10:1 to 1:10 and most preferably from 3:1 to 1:3.

If sodium is present, the weight ratio of the at least one water soluble or water dispersible source of sodium ions to the at least one water soluble or water dispersible source of zinc ions [Na/Zn] is from 100:1 to 1:100, more preferably from 10:1 to 1:10 and most preferably from 3:1 to 1:3,
and/or the weight ratio of the at least one water soluble or water dispersible source of sodium ions to the at least one water soluble or water dispersible source of lithium ions [Na/Li] is from 100:1 to 1:100, more preferably from 10:1 to 1:10 and most preferably from 3:1 to 1:3.

If both magnesium and sodium are present, the weight ratio of the at least one water soluble or water dispersible source of sodium ions to the at least one water soluble or water dispersible source of magnesium ions [Na/Mg] is preferably from 100:1 to 1:100, more preferably from 10:1 to 1:10 and most preferably from 3:1 to 1:3.

The pH-stabilizing composition component (B) added to the slurry of the invention in an amount of from 100 to 7,000 ppm, preferably added to the slurry of the invention in an amount of from 500 to 5,000 ppm, more preferably from 1, 000 to 4,000 ppm, and most preferably from 1,500 to 3,500 ppm, such as 2,000 to 3,000 ppm, based on the total weight of the slurry.

### Component (C)

Component (C) is a dispersant composition comprising a dispersant selected from the group of phosphoric acid derivatives and/or phosphonic acid derivatives.

A derivative of phosphoric acid and/or phosphonic acid in the sense of the present invention is defined to be a phosphoric acid and/or phosphonic acid in which one or more H-atoms present in the phosphoric acid and/or phosphonic acid has been replaced by a chemical group different from H, denoted by "R".

Such derivatives may also comprise, or consist of, neutralized phosphorous or phosphonic acid derivatives, e.g. neutralized amino tris(methylenephosphonic) acid (ATMP), or may comprise, or consist of, phosphorous or phosphonic acid esters.

Many such phosphoric acid derivatives and/or phosphonic acid derivatives comprising dispersants are known as sequestering or complexing agents e.g. in the field of cleaning products.

Preferred such groups R are independently selected from fatty acids (C3-C20) and its salts such as Li, Na, K, Ca, Mg; from an alcohol, this alcohol may be from a C6-C20 alcohol; alkyls which are preferably linear or branched and with 1 to 5 carbon atoms, alkenyls which are preferably linear or branched and with 1 to 5 carbon atoms; and aromatic groups with preferably 6 to 10 carbon atoms.

For example, phosphoric acid derivatives can be represented by the following formula: 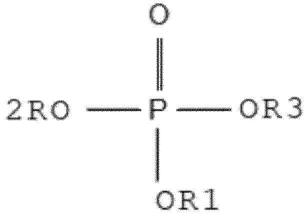 in which each R1, R2 and R3 independently is H or a group as specified above, and at least one of R1, R2 and R3 being different from H.

Such derivatives may also comprise, or consist of, neutralized phosphorous acid derivatives, or may comprise, or consist of, phosphorous acid esters.

For example, phosphoric acid esters contain one or more ester groups derived from C6-C20 alcohols.

Preferably, the dispersant of component (C) comprises, or consists of, a phosphonic acid derivative, such as an amino phosphonic acid and/or an ester.

Phosphonic acid derivatives can be represented by the following chemical formula: 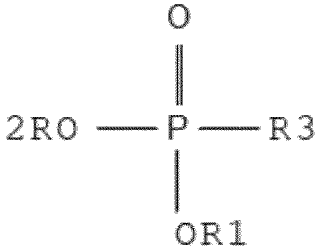 wherein R1, R2 and R3 independently are H or an organic group, i.e. a hydrocarbon group which may contain hetero-atoms, preferably a hydrocarbon group containing from 1 to 30 carbon atoms which may contain hetero-atoms, and wherein at least one of R1, R2 and R3 is different from H.

Preferably, R1, R2 and/or R3 are independently selected from are independently selected from fatty acids (C3-C10) and its salts such as Li, Na, K, Ca, Mg; alkyls which are preferably linear or branched and with 1 to 5 carbon atoms, alkenyls which are preferably linear or branched and with 1 to 5 carbon atoms; and aromatic groups with preferably 6 to 10 carbon atoms.

Where R1 and or R2 are derived from an alcohol, this alcohol may be from a C6-C20 alcohol. In one embodiment, the derivatives of phosphonic acid are amino phosphonic acid derivatives, wherein R3 is an alkyl amino group which may further be substituted by (alkyl-)phosphonic acid groups.

For example, the derivative may be amino tris(methylenephosphonic acid (ATMP, also: Ni-trilotris-methylenephosphonic acid), which can be depicted by the following formula:

Further examples for amino phosphonic acid derivatives are:

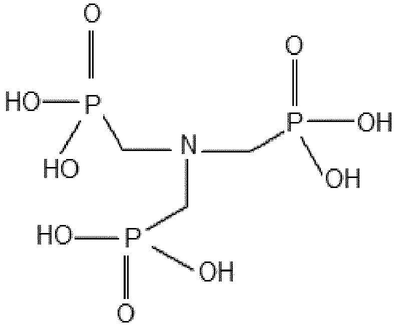

Amino di(methylenephosphonic acid (ADMP), diethylenetriamine penta(methylene-phosphonic acid (DTPMP, also {[(Phosphonomethyl) azanediyl] bis[ethane-2,1-diylnitrilobis(methylene)]}tetrakis(phosphonic acid)), and/or Ethylenediamine tetra(methylene phosphonic acid) (EDTMP, also {Ethane-1,2-diylbis[nitrilobis(methylene)]}tetrakis(phosphonic acid)). Also salts of ATMP, ADMP, DTPMP and/or EDTMP, such as the sodium salt, or esters of ATMP, ADMP, DTPMP and/or EDTMP, preferably of an C6 to C20 alcohol, more preferably a C6-C14 alcohol, may be used.

In a further embodiment, the derivatives of phosphonic acid are such wherein R3 is an alkyl group which may further contain heteroatoms, such as in OH-groups.

For example, the derivative may be 1-hydroxyethylidene-1,1-diphosphonic acid (HEDP), and/or phosphonobutanetricarboxylic acid (PBTC). Also salts of HEDP and/or PBTC, such as the sodium salt, or esters of HEDP and/or PBTC, preferably of an C6 to C20 alcohol more preferably a C6-C14 alcohol, may be used.

As an example of a dispersant composition (C), commercially available product "Polygon PC 1393" from Polygon Chemie containing ATMP can be mentioned.

Preferably, the dispersant composition is dissolved and/or dispersed in the slurry of the invention in an amount of from 0.1 to 20 wt.%, more preferably from 0.2 to 5 wt.%, based on the total weight of the slurry.

The dispersant is preferably contained in the dispersant composition in an amount of from 0.2 to 2.0 wt.%.

### Component (D)

Preferably, the slurry of the invention is obtainable by further dissolving and/or dispersing component (D) in the slurry which is an amino group-containing alcohol, preferably a mono-, di- and tri-alkanol amine with the alkanol having from 1 to 6 C-atoms, and the amine group, where not substituted with an alkanol group, contains H or C1 to C6-alkyl substituents, such as mono-, di- and tri-ethanol amine, dimethylaminoethanol, diethylaminoethanol, N-methyldiethanol amine, a mono-, di- and tri-isopropanol amine, and a mono-, di- and tri-isobutanol amine. Especially preferred are mono-, di- and tri-isobutanol amines, such as 2-amino-2-methyl-1-propanol (AMP).

Component (D) acts as a co-dispersant and further reduces viscosity. In addition, it is known to control microbial growth.
Preferably, component (D) is dissolved and/or dispersed in the slurry in an amount of from 0.01 to 0.5 wt.%, more preferably of from 0.05 to 0.25 wt.%, based on the total weight of the slurry.

### Further Additives

The slurry of the present invention may further comprise usual additives such as a viscosity modifier, water-miscible organic solvent, surfactant, defoamer, and humectant.

The additives can be added by common techniques and methods.

Preferably, the slurry of the present invention comprises further a viscosity modifier. The viscosity modifier is preferably selected from the group consisting of glycerol, polyethers, such as polyethylene glycol and poly(ethylene oxide), cellulose polymers such as cellulose ethers as e.g. hydroxyethyl cellulose, hydroxypropyl cellulose and carboxymethyl cellulose, water-soluble acrylics, water-soluble polyesters, water-soluble polyurethanes, homopolymers of 2-ethyl-oxazoline, for example poly-2-ethyl-2-oxazoline, polyvinyl alcohol and poly(vinylpyrrolidones), silicates such as phyllosilicates, and mixtures thereof.

Amongst these preferred viscosity modifiers cellulose ethers and phyllosilicates are preferred, especially phyllosilicates.

The viscosity modifier is usually contained in an aqueous composition, for example in an amount of 0.01 to 10 wt.%, or from 0.1 to 5 wt.%, such as 1 wt.%.

Preferably, the composition containing the viscosity modifier is dissolved and/or dispersed in the slurry in an amount of from 0.1 to 5 wt.%, more preferably from 0.2 to 2.0 wt.%, based on the total weight of the slurry.

The slurry may contain a water-miscible organic solvent, which preferably is selected from C1-to C6-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofurane and dioxane; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly- alkyleneglycols, preferably diethylene glycol, triethylene glycol, polyethylene glycol and polypropylene glycol; triols, preferably 1,2,6-hexanetriol; mono-C1-4-alkyl ethers of diols, preferably mono-C1-4-alkyl ethers of diols having 2 to 12 carbon atoms, especially 2- methoxyethanol, 2-(2-methoxyethoxy)ethanol, 2-(2-ethoxyethoxy)-ethanol, 2-[2-(2- methoxyethoxy)ethoxy]ethanol, 2-[2-(2- ethoxyethoxy)-ethoxy]-ethanol and ethylene glycol monoallyl ether; cyclic amides, preferably 2-pyrrolidone, N-methyl-2-pyrrolidone, N-ethyl-2- pyrrolidone, caprolactam and 1,3-dimethylimidazolidone; cyclic esters, preferably caprolactone; sulfoxides, preferably dimethyl sulfoxide; and sulfones.

Preferred water-miscible organic solvents are cyclic amides, especially 2-pyrrolidone, N- methyl-pyrrolidone and N-ethyl-pyrrolidone; diols, especially 1,5-pentane diol, ethylene glycol, diethylene glycol and triethylene glycol; and mono-C1-4-alkyl and C1-4-alkyl ethers of diols, more preferably mono-C1-4-alkyl ethers of diols having 2 to 12 carbon atoms, especially 2-methoxy-2-ethoxy-2-ethoxyethanol.

Especially preferred solvents include 2-pyrrolidone, ethylene glycol, propylene glycol and diethylene glycol.

Further, surfactants can be employed and may be ionic or, more preferably, non-ionic. Acetylenic surfactants, fluoro surfactants and silicon surfactants are preferred. Examples of fluoro surfactants include Zonyl^{®} and Capstone^{®} grades from DuPont, e.g. Zonyl^{®} FSO, FSN and FSA and short-chain perfluoro-based anionic fluoro surfactants such as Chemguard S-103A available from Chemguard. Acetylene surfactants are more preferred especially 2, 4,7,9- tetramethyl-5-decyne- 4,7-diol and ethylene oxide condensates thereof, for example Surfynol^{®} and Dynol^{®} surfactants available from Air Products. The ethylene oxide condensates of 2,4,7,9-tetramethyl-5-decyne-4,7-diol are particularly preferred. Mixtures containing different surfactants may be used. Mixed surfactants may be of the same type e.g. two non-ionic surfactants or be of different types e.g. an ionic and non-ionic surfactant.

### Further Aspects of the invention

The present invention also relates to the use of the pigmented slurry in any one of the embodiments as described herein for the preparation of a coating formulations.
The present invention thus furthermore provides a coating formulations comprising the slurry according to any one of the embodiments herein described.

Coating formulations are, for example, paint formulations, lacquer formulations or printing ink formulations.

Preferably, the coating formulation comprises the water-based slurry of the invention in an amount of from 0.1 to 98% by weight, more preferably from 1 to 50% by weight, more preferably from 2 to 30% by weight, most preferably from 3 to 25% by weight, based on the total weight of the coating formulation. In addition to the pigment composition according to the invention, the formulation may have a usual pigment composition, and pigments. Preferably, the formulation does not contain any further pigment compositions.

Furthermore, the invention relates to a substrate which has a surface coated with the coating formulation in any one of the embodiments as described herein.

Such substrates include without limitation wood, plastics, metals, paper, plaster, glass fabric, and mixtures thereof.

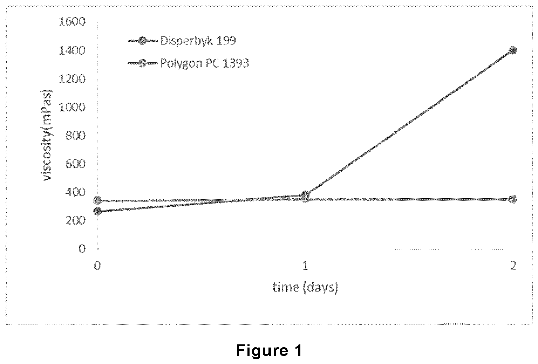

Figure 1 shows the development of the slurry viscosity with time of a slurry prepared according to the invention and of a comparative slurry.

### Test and Measurement Methods

### a) Particle size

The size of the pigment particles was determined by using a CPS Disc centrifuge, Model DC 20000 available from CPS Instrument, Inc. located in Florida, United States of America. The sample was prepared by obtaining a first premix by mixing 2 g of a dry pigment particles with 80 g sodium hexametaphosphate (0.06 mass % in water) commercially available from BK Giulini GmbH in Ladenburg, Germany, under the name Calgon N until the first premix was homogenized. Subsequently, 2 g of this first premix were added to 48 g Calgon N, and again sufficiently homogenized by mixing to obtain a second premix. 100 pi of this second premix were used as the sample for determining the particle size. The centrifuge was operated at 3,000 rpm. The calibration standard parameters were as follows:
Particle density: 1.385 g/mL
Peak diameter: 1.27 microliters
Half height peak width: 0.08 microliters

The fluid parameters were as follows:
Fluid density: 1.045 g/mL
Fluid refraction index: 1.344
Fluid viscosity: 1.2 cps.

### b) Viscosity

The viscosity of the slurries was measured according to ISO 2555 using a Brookfield viscometer at 100 rpm (a suitable spindle according to ISO regulations was used which was spindle 3) at 25°C.

### c) pH value

The pH value of the slurries was measured according to ISO 787-9, using the electrode of a calibrated pH meter

### d) Sieve residue

The sieve residue of the slurries was measured according to ISO 787-18, the residue was determined after sieving the slurry on a 44 micron sieve.

### e) Solids content:

The solids content of the slurries was measured according to ISO 787-2, by measurement of the residue after drying the slurry at 105 °C.

### Examples

Slurries of containing TiO₂ pigments were produced in the following way:
In a mixture of water, dispersant and 2-amino-2-methyl-1-propanol (AMP), TiO₂ was added and dispersed using a laboratory dissolver until complete dispersion of the agglomerates was achieved (approx. 15-20 minutes). Finally, thickener and a pH-stabilizing composition were added.

In Example 1 (IE1), a slurry according to the invention was produced using the components in the amounts as indicated in Table 1. The pH-stabilizing composition comprising Li- and Zn-ions was used. As a dispersant, Polygon PC 1393 was used which is a phosphonic acid based dispersant.

**Table 1: Example 1**

| | ***Amount (g)*** | ***Function*** | ***Producer*** |
|---|---|---|---|
| Water | 225.98 | | |
| Cellulose QP-15000H | 0.16 | Thickener/anti sedimentation agent | DOW |
| LiCO₃ | 0.5 | pH-stabilizing composition | Merck |
| ZnO | 0.5 | | Merck |
| Polygon PC 1393 | 7.0 | Dispersant | Polygon Chemie |
| AMP 95 | 0.86 | Viscosity reducing agent | Angus Chemie |
| KRONOS 2310 | 765.0 | TiO₂ | KRONOS |
| total | 1,000.0 | | |

For comparison, a slurry was produced in Comparative Example 1 (CE1) in which Disperbyk 199 was used as a dispersant as an example for a commonly used dispersant for the preparation of pigmented slurries. Disperbyk 199 is an acrylate copolymer with pigment-affinic groups (steric dispersant). The composition of the slurry of CE1 is given in Table 2.

**Table 2: Comparative Example 1**

| | ***Amount (g)*** | ***Function*** | ***Producer*** |
|---|---|---|---|
| Water | 219.94 | | |
| Cellulose QP-15000H | 0.16 | Thickener/anti sedimentation agent | DOW |
| LiCO₃ | 0.5 | pH-stabilizing composition | Merck |
| ZnO | 0.5 | | Merck |
| Disperbyk 199 | 13 | Dispersant | Byk |
| AMP 95 | 0,9 | Viscosity reducing agent | Angus Chemie |
| KRONOS 2310 | 765 | TiO₂ | KRONOS |
| total | 1000 | | |

The stability of the slurries of IE 1 and CE1 prepared as described above against sedimentation and increased viscosity was then tested as follows:
Samples of the slurries were filled into airtight glass bottles and stored in an oven at 50 °C for 4 weeks. The pH and viscosity were measured weekly and an assessment of sedimentation (stirring with a glass rod) and serum formation (visual assessment) was carried out, as described above.

The desired starting value for the viscosity of the slurry is within the range of 200 to 400 mPas. Furthermore, the smallest possible change over time in viscosity and pH value and low serum and sediment formation are desirable, so that the slurry can be considered as storage stable and commercially usable.

The results obtained from the tests showed that the slurry of IE1 is stable and met all quality criteria. In particular, the slurry is stable against settling and sedimentation as well as pH and viscosity stable.

The measured viscosities as a function of time after preparation of the slurry of IE1 (and also that of the slurry of CE1) are shown in Figure 1. It can be seen that the viscosity remains stable at a value of slightly below 400 mPas which within the desired range.

On the other hand, as can also be seen from Figure 1, while the viscosity of the slurry of CE1 is around 300 mPas after preparation, it increases already after one day to a value of about 400 mPas, and further increases after the second day to a value of about 1,400 mPas. Thus, this slurry is not storage stable and cannot be used in commercial practice.

Further experiments using other commonly used dispersants of the preparation of pigmented slurries showed that it was not possible to formulate a stable slurry using any of these dispersants; the viscosity rose to > 1,000 mPas within a few days, but at the latest after 1 week. The starting value was also often above the desired value of 200 and 400 mPas.

The experiments show that only the combination of a pH-stabilizing composition containing a water soluble or water dispersible source of lithium ions with a dispersant selected from the group of phosphoric acid derivatives and/or phosphonic acid derivatives allows for the production of water-based pigment slurry comprising Ti-oxide and/or Fe-oxide pigments which fulfill all quality criteria for commercial use, in particular which are stable and show a stable viscosity in the desired range.

## Claims

1. Water-based pigment slurry obtainable by dissolving and/or dispersing the following components in water:
(A) a Ti-oxide and/or Fe-oxide pigment,
(B) a pH-stabilizing composition comprising a water soluble or water dispersible source of lithium ions,
(C) a dispersant composition comprising a dispersant selected from the group of phosphoric acid derivatives and/or phosphonic acid derivatives.

2. The slurry according to claim 1 wherein component (A) is dissolved and/or dispersed in the slurry in an amount of up to 90 wt.%.

3. The slurry according to claim 1 or 2 wherein component (B) is dissolved and/or dispersed in the slurry in an amount of from 500 to 5,000 ppm.

4. The slurry according to any one of the preceding claims wherein component (C) is dissolved and/or dispersed in the slurry in an amount of from 0.1 to 20 wt.%, preferably from 0.2 to 5 wt.%.

5. The slurry according to any one of the preceding claims wherein component (A) comprises a TiO₂, preferably rutile, pigment.

6. The slurry according to any one of the preceding claims wherein component (B) comprises the water soluble or water dispersible source of lithium ions in an amount of from 750 to 5,000 ppm, calculated relative to the weight of water of the pH-stabilizing composition.

7. The slurry according to any one of the preceding claims wherein component (B) comprises lithium carbonate.

8. The slurry according to any one of the preceding claims wherein component (B) further comprises a water soluble or water dispersible source of zinc ions.

9. The slurry according to claim 8 wherein component (B) comprises the water soluble or water dispersible source of zinc ions in an amount of from 750 to 5,000 ppm, calculated relative to the weight of water of the pH-stabilizing composition.

10. The slurry according to any one of the preceding claims wherein component (C) comprises a phosphonic acid derivative dispersant.

11. The slurry according to any one of the preceding claims obtainable by further dissolving and/or dispersing component:
(D) an amino group-containing alcohol
in the slurry.

12. The slurry according to any one of the preceding claims which has a viscosity of from 50 to 5,000 mPas, preferably from 80 to 2,000 mPas.

13. Use of a slurry according to any one of the preceding claims for the preparation of a coating formulation.

14. A coating formulation comprising the slurry according to any one of claims 1 to 13.

15. A substrate which has a surface coated with the coating formulation according to claim 14.
